Europäisches Patentamt

European Patent Office

Office européen des brevets

(19)

(11) Numéro de publication: **0 233 126**
**B1**

(12) ## FASCICULE DE BREVET EUROPEEN

(45) Date de publication du fascicule du brevet:
29.08.90

(51) Int. Cl.⁵: **A21D 2/02**

(21) Numéro de dépôt: **87400316.3**

(22) Date de dépôt: **12.02.87**

(54) **Pain naturel surhydraté, son procédé de fabrication rapide et farine pour la mise en oeuvre du procédé.**

(30) Priorité: **14.02.86 FR 8602018**

(43) Date de publication de la demande:
**19.08.87 Bulletin 87/34**

(45) Mention de la délivrance du brevet:
**29.08.90 Bulletin 90/35**

(84) Etats contractants désignés:
**AT BE CH DE ES FR GB GR IT LI LU NL SE**

(56) Documents cités:
**FR-A- 1 070 174**
**FR-A- 2 426 413**

**THE BAKERS DIGEST, Annual Index, vol. XXI, août 1947, pages 25-27, US; J.A. DUNN: "The importance of salt in baking"**
**N. NORWAK: "Bak zelf uw brood en gebak", 1975, Drukkerij-Uitgeverij, Helmond B.V., Helmond, NL**

(73) Titulaire: **Viron, Philippe, 81, Boulevard Suchet, F-75016 Paris(FR)**

(72) Inventeur: **Viron, Philippe, 81, Boulevard Suchet, F-75016 Paris(FR)**

(74) Mandataire: **Ahner, Francis et al, CABINET REGIMBEAU, 26, avenue Kléber, F-75116 Paris(FR)**

ACTORUM AG

## Description

La présente invention concerne un pain naturel surhydraté, à la levure sans levain, un procédé de fabrication rapide d'un tel pain, et une farine, à titre de moyen nécessaire pour la mise en oeuvre du procédé.

Le pain selon l'invention est préparé selon la méthode de panification directe c'est-à-dire qu'elle ne fait pas intervenir de levain, mais une levure de boulangerie, pour réaliser la fermentation de la pâte qui comporte essentiellement de l'eau, de la farine de blé, de la levure et du sel.

FR-A 2 426 413 décrit la fabrication d'un pain naturel impliquant l'utilisation de 20 kg de levain pour 100 kg de farine, alors que le pain est obtenu, conformément à la présente invention, en utilisant une farine sans levain.

L'état de la technique peut en outre être illustré par THE BAKERS DIGEST, Annual Index, Vol. XXI, août 1947, pages 25–27 et par BAK ZELF UW BROOD EN GEBAK, 1975, Drukkerij-Uitgeverij, Helmond B.V., Helmond NL, qui décrivent l'utilisation de pâte fortement hydratée mais conduisent toutefois à des produits totalement différents, principalement du fait de l'incorporation de matières grasses qui interdisent l'obtention de pain de type naturel ou d'aspect rustique.

La particularité essentielle du pain selon l'invention réside dans le fait qu'il est surhydraté, étant obtenu à partir d'une pâte à pain surhydratée, tout en gardant, par rapport au pain sans levain classique, de bonnes propriétés organoleptiques.

Un autre aspect intéressant de l'invention réside dans le fait que ce mode de panification est plus rapide que les procédés classiques.

Ainsi, la présente invention concerne un pain naturel sans levain, surhydraté, comportant de la mie et une croûte, d'aspect rustique, obtenu à partir d'une pâte surhydratée contenant essentiellement de l'eau, de la farine panifiable éventuellement améliorée, de la levure de boulangerie, et du sel, caractérisé en ce que la pâte est surhydratée à 80 % en poids de farine, en ce que la teneur en eau de la mie apres ressuage est de 50 % en poids par rapport à la substance humide.

Pour la fabrication du pain, on utilise d'ordinaire des pâtes hydratées à 60 % en poids de farine, et les pains ordinaires présentent une teneur en eau de la mie après ressuage de l'ordre de 42 à 45 % en poids.

Comme cela apparaîtra dans les exemples, la Demanderesse a mis en évidence une propriété intéressante et surprenante du pain selon l'invention à savoir sa conservation naturelle. En effet, les pains conservent une saveur et une mâche agréable après plusieurs jours de conservation à l'ambiante.

Cette bonne conservation, sans doute due à la teneur en eau élevée de la mie est inattendue pour un pain sans levain.

En effet, c'est avec les pains au levain, dont le mécanisme de fermentation est très différent du pain préparé avec une levure de boulangerie selon l'invention, que l'on obtient d'ordinaire des pains dont la conservation dépasse 8 jours, ceci grâce à l'acidité organique développée par le levain, comme on l'admet généralement.

Une caractéristique du pain selon l'invention est sa densité. Cette densité calculée après ressuage, c'est-à-dire après refroidissement du pain juste après la cuisson, est de l'ordre de 0,20, de préférence compris entre 0,20 et 0,22.

Selon l'invention, la pâte à pain comprend environ 100 parties en poids de farine sans levain, pour 80 parties en poids d'eau potable, 2 parties en poids de levure, et 2 parties en poids de sel.

Comme farine, on peut utiliser toute farine panifiable classique, par exemple une farine de type 55 (après calcination de 100 g de farine, restent 0,56 g ± 0,05 g de matière minerale). Cependant, on préfère une farine de blé sans fève ne contenant pas d'acide ascorbique, renforcée uniquement avec du Manitoba, du gluten, du malt, et des amylases fongiques, qui lui permettent d'atteindre les caractéristiques W, P/L définies ci-après. Les valeurs W, P, L et de gonflement sont les caractéristiques d'une farine analysée à l'alvéographe Chopin ("La Boulangerie moderne" R. Clavel, 1978 - p 29-32 Eyrolles Ed-Paris).

Selon l'invention, on préfère des farines dont les courbes d'alvéographe Chopin présentent un W minimum de 190 et de préférence 200 erg, un rapport P/L minimum de 0,60, et un gonflement minimum de 22 cm³.

Les Manitoba peuvent renforcer, ils ont en effet un W fort, allant de 300 à 450 erg.

De plus, selon l'invention, la farine peut contenir environ 5 % en poids de farine de seigle, en tant qu'agent de flaveur.

Comme levure, on utilise une levure de boulangerie, la dose utilisée étant ordinaire, à savoir environ 2 % en poids de farine.

On peut, de plus, ajouter à la pâte des éléments supplémentaires pour préparer des pains fantaisie, comme des morceaux de fruits ou des fruits secs, par exemples des pommes, des noix.

La quantité d'eau utilisée à savoir 80 % en poids de farine est une caractéristique essentielle de la pâte. De cette hydratation élevée découle toutes les caractéristiques du pain selon l'invention, ainsi que certaines caractéristiques essentielles du procédé de fabrication du pain selon l'invention, en particulier la confection de la pâte par battage à l'aide d'un batteur, non à l'aide d'un pétrin traditionnel.

La présente invention concerne également un procédé de fabrication d'un pain naturel surhydraté, obtenu à partir d'une pâte surhydratée, caractérisé en ce qu'il comprend les opérations successives suivantes :

a) introduction, dans la cuve d'un batteur de :
100 parties en poids de farine de blé sans levain,
80 parties en poids d'eau de coulage,
2 parties en poids de levure préalablement diluée dans l'eau de coulage,
b) frasage, consistant à mélanger les ingrédients introduits dans la cuve du batteur, jusqu'à obtention d'un mélange homogène,
c) confection de la pâte par battage jusqu'à ce que les films protéiques du gluten soient formés,
d) pointage de la pâte pendant environ 1 heure dans un bac fariné ou éventuellement la cuve du batteur, et
e) détaillage sur une planche farinée de la pâte en pâtons du poids désiré ;
f) façonnage rapide des pâtons immédiatement après leur détaillage ;
g) apprêt des pâtons en bannetons pendant une durée de 40 minutes ;
h) cuisson des pâtons dans un four à une température de 240 à 320°C.

Avec l'hydratation élevée retenue pour ce procédé, la confection de la pâte par battage est très profondément différente du travail de pétrissage dans le cas d'une pâte à hydratation classique. En effet, la grande quantité d'eau dans la pâte implique une faible viscosité globale de la pâte, ce qui oblige, pour la mise en oeuvre du procédé, des moyens de battage permettant de communiquer à la pâte, dans un temps acceptable, l'énergie nécessaire suffisante à la mise en forme des films protéiques du gluten par étirement et étalement.

En effet, après l'addition de l'eau, au début du mélange, des molécules d'eau se lient aux composants de la farine, l'amidon et les protéines, par liaison hydrogène ; les composés hydratés se lient alors entre eux progressivement donnant la structure primaire de la pâte. Le "ciment" de cette structure est essentiellement constitué par le gluten, c'est-à-dire certaines protéines de la farine de blé qui possèdent des propriétés visco-élastiques particulières, qui leur permettront de former un réseau de films élastiques et imperméables enrobant les grains d'amidon.

Au sein du gluten, qui représente, suivant les variétés de blé, de 9 à 14 % du poids sec de la farine, on distingue deux catégories de protéines : les gliadines d'une part, de poids moléculaire environ 40 000, formées de chaînes protéiques repliées et reliées entre elles par des ponts disulfure assurant la cohésion de la masse élastique et les gluténines de poids moléculaire beaucoup plus élevé, 2 à 3 millions, qui forment un réseau tenace, peu extensible à l'état hydraté.

Cette aptitude des protéines du gluten à former un réseau élastique capable d'emprisonner le gaz carbonique formé pendant la fermentation, est à la base même de la valeur boulangère des farines et de leur force. Ce sont les propriétés fonctionnelles de ces protéines du gluten, et la façon dont les chaînes protéiques sont étirées, dépliées et orientées lors du pétrissage qui déterminent les qualités ultérieures du pain obtenu.

En effet, durant la fermentation ultérieure, le gaz carbonique produit par la fermentation sera emprisonné dans le réseau glutineux, et provoquera le gonflement de la pâte.

Dans le cas de la pâte surhydratée selon l'invention, le battage doit être conduit jusqu'à ce que les films protéiques du gluten soient formés. Il peut être réalisé dans une cuve de batteur équipée d'un outil mobile, comme un crochet ou une feuille. L'opération de frasage est alors menée à faible vitesse de rotation de l'outil, et pendant une courte période, puis l'opération de battage est menée à une vitesse de rotation de l'outil plus élevée et jusqu'à ce que la pâte reste retenue sur l'outil du batteur. Un faible temps de repos, par exemple de l'ordre de quelques minutes, peut être observé entre les opérations de frasage et de battage.

C'est la faible viscosité globale de la pâte qui oblige à tourner à grande vitesse, pour communiquer l'énergie nécessaire suffisante à la mise en forme des films protéiques du gluten définis ci-dessus. A partir de la prise de consistance de la pâte, qui survient après quelques minutes de battage, suivant les batteurs, leur vitesse et la quantité de pâte mise en oeuvre, la pâte devenue cohérente reste progressivement agrégée à l'outil du batteur en se décollant de la paroi de la cuve. Le décollement complet précédé d'une période où la pâte "claque" contre les parois de la cuve du batteur, caractérise l'optimum pour la consistance dans le procédé selon l'invention.

A titre d'exemple, pour une pâte préparée à partir d'un kg de farine, dans un batteur équipé d'un crochet, le frasage dure environ 2 minutes, à une vitesse de rotation du crochet de 90 tours par minute, le battage durant 5 minutes et demie pour une vitesse de rotation du crochet d'environ 400 tours par minute.

Selon d'autres conditions, pour des pâtes préparées à partir de 2, 4 et 6 kg de farine, le battage dure respectivement 5, 6 et 7 minutes.

C'est de préférence au cours de l'opération de battage que l'on introduit le sel fin, à raison de 2 parties en poids pour 100 parties de farine.

La consistance, c'est-à-dire les propriétés viscoélastiques de la pâte peuvent être définies par les valeurs des modules conservatifs G′ et dissipatifs G″ qui traduisent respectivement son comportement élastique et visqueux, en fonction d'une sollicitation mécanique sinusoïdale imposée.

La méthode de mesure permettant de caractériser le comportement rhéologique de la pâte, qui a été étudié à l'aide de l'essai harmonique à contrainte imposée, est décrite dans les ouvrages suivants :
WHORLON R.W.
"Rheological Methods"
Chichester England
Ed. Ellis Horwood Ltd
1980, p 143-250, et
J.D. FERRY
"Viscoelastic properties of polymers"
3e Edition - New York
John WILEY & SONS Inc
1980, p 11-14.

Selon l'invention, la valeur de ces modules est de préférence de 100 N/m$^2$ au minimum.

La température de la pâte à la fin du battage est de préférence de 30° ± 2°C. Pour atteindre et se maintenir dans ce domaine de température optimum, il faut tenir compte d'une part de la température initiale des ingrédients, d'autre part de la température du fournil et enfin de l'élevation de température du au travail de la pâte.

Le choix particulier du matériel utilisé pour mettre en oeuvre le procédé, en particulier lors de la préparation de la pâte, à savoir les opérations de frasage et de confection de la pâte par battage, n'est pas critique ;
en particulier, tout système voisin capable de réaliser un battage satisfaisant est utilisable. Pour les autres étapes, on utilise le matériel classique en boulangerie.

Après la confection de la pâte, a lieu la première fermentation, c'est-à-dire le pointage. La dose de levure est conforme à la normale, la durée de fermentation étant plus courte par rapport au procédé classique à pâte hydratée à 60 % en poids de farine. La forte hydratation est en effet un facteur favorable d'une part à la fermentation considérée comme processus métabolique microbien, et d'autre part à l'amylolyse qui se produit dans la pâte sous l'effet des β-amylases de la farine, et favorise ainsi la fermentation alcoolique par la levure.

Après le pointage de la pâte, la préparation et la cuisson des pains s'effectuent de façon usuelle, par détaillage, sur une planche farinée par exemple, de la pâte en pâtons, façonnage des pâtons après leur détaillage, apprêt des pâtons en bannetons et cuisson des pâtons.

La texture de la mie est conditionnée par le battage réalisé dans les conditions de surhydratation, qui donne naissance, lors de la cuisson, à des alvéoles à parois épaisses, grossières et inégalement réparties. En raison de son hydratation importante, le pain peut paraître moins salé.

C'est de la forte hydratation globale de la mie, associée à une texture assez grossière de la mie, qui favorise la rétention d'eau, que découle la caractéristique d'aptitude à la conservation du pain selon l'invention.

Bien que toute farine panifiable de qualité soit utilisable, la présente invention concerne également à titre de moyen nécessaire pour la mise en oeuvre du procédé, une farine sans levain renforcée uniquement avec du Manitoba, du gluten, du malt et des amylases fongiques.

De préférence, elle est en outre exempte de farine de fève et d'acide ascorbique, mais peut contenir environ 5 % en poids de farine de seigle.

De préférence, on utilise une farine caractérisée en ce que sa courbe à l'alvéographe Chopin présente les caractéristiques suivantes :
W minimum : 190 erg,
P/L minimum : 0,60
gonflement minimum : 22 cm$^3$.

Enfin, on préfère une farine présentant un W minimum de 200 erg.

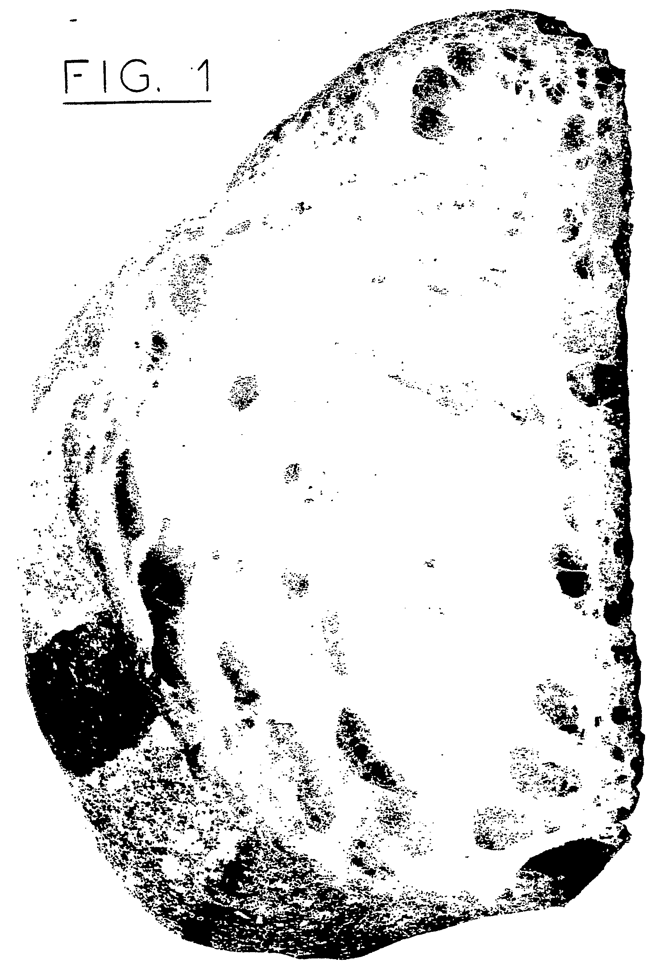

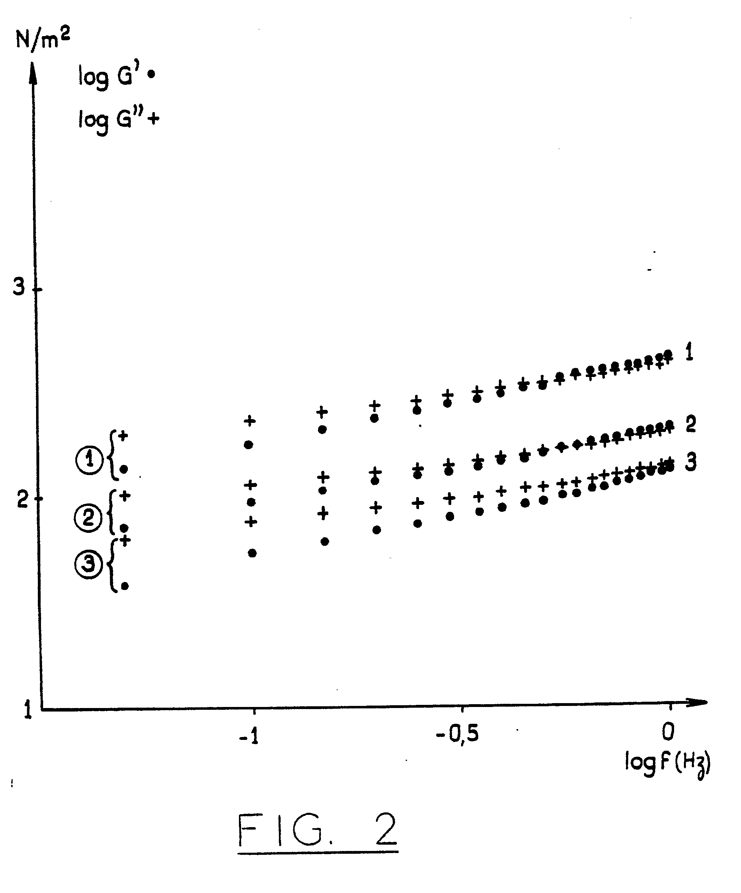

D'autres caractéristiques et avantages de l'invention apparaîtront à la lecture des exemples détaillés ci-après, mentionnés à titre de simple illustration. La figure 1 illustre l'aspect rustique du pain selon l'invention, et la figure 2 illustre le comportement réhologique d'une pâte à pain selon l'invention.

EXEMPLE 1 :

La composition de la pâte préparée est la suivante :
Farine : 1 000 grammes,
Eau : 800 grammes,
Levure : 20 grammes,
Sel : 20 grammes.

La farine est une farine de force, sans fève. Cette farine a un W minimum de 210, un P/L minimum de 0,60, un gonflement minimum de 22, avec une température de 20°C.

L'eau doit être potable. Elle a une température légèrement supérieure à 30°C pour le coulage de la pétrissée.

Le sel est uniquement du sel fin.

La levure de boulangerie utilisée est fraîche, conservée au froid, elle est sortie en température ambiante 30 à 45 minutes avant son utilisation pour éviter une grande différence avec l'eau.

Le fournil est à une température ambiante d'environ 25°C, pour limiter les pertes de chaleur au niveau de la pâte, ce qui gêne le développement normal de celle-ci.

On met les ingrédients : eau, farine et levure préalablement diluée dans l'eau de coulage dans la cuve du batteur, de préférence à variateur. L'outil utilisé pour battre est le crochet.

On commence par fraser, le frasage durant pendant 30 secondes ; on arrête le batteur pour nettoyer la cuve, pendant 15 secondes, et on redémarre le batteur pour le battage à une vitesse plus grande.

Au bout de cinq minutes, on met le sel et le battage est fini à la neuvième minute, lorsque la pâte se décolle entièrement des parois de la cuve.

Apres l'arrêt du batteur, on met la pâte sur une planche bien farinée, on resserre la pâte légèrement pour une meilleure cohésion. Cette opération finie, on prend la pâte, on la dépose dans un bac assez vaste pour qu'elle puisse se développer sans aucune gêne, pendant le pointage qui dure une heure, et ce, à environ 30° C.

Le pointage terminé, la pâte est mise sur une planche farinée, cette opération permettant de détailler la pâte en plusieurs pâtons, de poids et de formes différents. Après avoir détaillé chaque pâton, on procède au façonnage, plus ou moins serré selon l'état de la pâte. L'apprêt se fait alors dans des bannetons, pendant une durée de quarantes minutes.

L'enfournement se fait soit à la pelle, soit au tapis dans un four contenant peu de buée. La cuisson se fait à four vif pendant quelques minutes, puis le four est arrêté, les pâtons continuant leur cuisson, sur une courbe descendante. La cuisson dure en tout quarante minutes environ.

La figure 1 annexée illustre bien l'aspect rustique du pain ainsi obtenu.

EXEMPLE 2 :

Selon un autre mode de réalisation, en utilisant les mêmes proportions pour les ingrédients, on choisit une composition à 95 % de farine de blé de très bonne qualité, sans fève, renforcée uniquement avec du Manitoba, du gluten, du malt, des amylases fongiques, sans acide ascorbique. Elle a un W minimum de 200 erg, un P/L minimum de 0,60, un gonflement minimum de 22 cm³. Les 5 % restants de la composition de la farine sont du seigle, seigle du Tsar Type 70.

Les opérations sont menées de façon similaire à l'exemple 1, jusqu'à l'opération de frasage qui se fait en deux temps, de la manière suivante : Dans cet exemple, on a utilisé un mélangeur BONNET®MX 40 S équipé d'un crochet.

On mélange grossièrement les ingrédients pendant une minute de marche du batteur à 36 tours/minute pour la tête mobile et 90 tours/minutes pour le crochet, on arrête le batteur après la première minute pour nettoyer la cuve de la pâte adhérent à la paroi. Cette opération dure 30 secondes. On remet le batteur en marche pendant 30 secondes. Le frasage dure donc deux minutes.

Le battage commence à la fin du frasage, on incorpore le sel sans marquer d'arrêt, puis on augmente la vitesse du batteur à 170 tours par minute pour la tête mobile et 416 tours par minute pour le crochet. La durée totale du battage est de 5 minutes et 30 secondes. A la fin de cette période, la pâte se décolle de la paroi de la cuve. Le battage est terminé. A la fin du battage, la pâte est à une température de 30° C environ.

Après le battage, on recouvre le bac où se trouve la pâte pour éviter le croûtage superficiel de celle-ci. Le pointage dure une heure, à partir du moment où la pâte se trouve dans le bac. L'heure de pointage terminée, on dépose la totalité da la pâte sur une planche farinée.

On détaille alors la pâte à l'aide d'un coupe pâte, en plusieurs pâtons de grosseur variable. Le façonnage se fait dès que les pâtons ont été détaillés sans trop serrer lors de la tourne.

Les pâtons façonnés sont mis dans des bannetons pour la période d'apprêt, l'apprêt se faisant en bannetons, en raison de l'état physique de la pâte surhydratée. L'apprêt commence dès que le dernier pâton a été façonné, et dure 40 minutes.

L'enfournement se fait, soit à la pelle, soit au tapis, dans une enceinte de four contenant peu de buée. Les pâtons sont coupés d'un seul coup de lame en long sur le dessus.

La cuisson est réalisée selon les règles de l'art de façon classique en boulangerie.

Les conditions de cuisson sont en fait variables suivant le type de four, l'emplacement des thermostats et la valeur calorique des soles de cuisson. La température initiale (250°C) est conservée pendant les 5 à 6 premières minutes, puis ensuite diminuée pour avoir une cuisson en courbe descendante. La cuisson dure 40 à 45 minutes.

EXEMPLE 3 :

Densité

La densité a été calculée sur des pains de volumes différents après 2 heures de ressuage. Les résultats sont présentés au tableau 1 suivant.

TABLEAU 1

| POIDS (g) | VOLUME ($cm^3$) | DENSITE |
|---|---|---|
| 280 | 1 350 | 0,207 |
| 300 | 1 440 | 0,208 |
| 320 | 1 612 | 0,199 |
| 350 | 1 692 | 0,207 |
| 440 | 2 195 | 0,200 |
| 500 | 2 300 | 0,217 |

EXEMPLE 4 :

Conservation des pains

On a étudié la conservation des pains en mesurant après ressuage, au bout de 2 heures, 4 jours et 8 jours de conservation à l'ambiante, la teneur en eau de la mie et l'épaisseur de la sous-croûte, c'est-à-dire la partie du pain qui se trouve entre la croute sèche et la mie de teneur en eau homogène. Ces résultats sont présentés au tableau 2 suivant.

TABLEAU 2 :

| | EPAISSEUR SOUS-CROUTE (mm) | TENEUR EN EAU (%) |
|---|---|---|
| 2 heures | 5 | 50 - 52 |
| 4 jours | 5 - 10 | 50 |
| 8 jours | 10 - 20 | 47 - 49 |

EXEMPLE 5 :

Comportement viscoélastique de la pâte, mesure des modules

On a étudié ce comportement par la méthode dite de l'essai harmonique.

Dans les conditions expérimentales, le comportement viscoélastique de la pâte peut être assimilée à un comporotement linéaire. En effet, les courbes de déformations, en fonction du temps à fréquence donnée, obtenues au bout du nombre de cycles imposé par le programme, ne diffèrent pas sensiblement de sinusoïdes. Les modules G′ et G″ obtenus sont des modules apparents.

Le comportement viscoélastique d'un matériau linéaire est entièrement décrit par les courbes de G′ et G″ en fonction de la fréquence :
G′, dit module conservatif, mesure la composante élastique du matériau ;
G″, dit module dissipatif, mesure la composante visqueuse.

Conditions expérimentales

Mode de déformation : cisaillement rotationnel cône-plan ;
Appareillage : rhéomètre à contrainte imposée Carri-Med piloté par microordinateur Apple II. Logiciel "essais harmoniques" Carrimed", 2ème version ;
Système de mesure : cône de diamètre 2 cm et d'angle 4° ; température : 20°C
Les échantillons sont laissés au repos 10 minutes après avoir été mis en place dans le système de mesure avant de procéder aux essais.
La figure 1 décrit le comportement en régime harmonique de la pâte dans le domaine de fréquence 0,05 - 1 Hz, et l'évolution de la pâte au cours du temps (au repos), pour une amplitude de la contrainte imposée $O_0 = 47,47$ N/m2, à 20° C. (1) 1ère mesure ; (2) après 1 h de repos ; (3) après 2h de repos.
On observe que :

a) G′ et G″ ont des valeurs très voisines sur l'ensemble du domaine des fréquences, les composantes élastique et visqueuse sont équilibrées, toutes deux faibles,
b) G′ et G″ ne varient pas beaucoup en fonction de la fréquence,
c) le comportement rhéologique de la pâte évolue avec le temps, tout en restant du même type. On observe d'abord un affaiblissement de la consistance, qui affecte davantage la composante élastique que la composante visqueuse.

Dans le domaine de fréquences 0,05 - 1 Hz, G′ et G″ ont des valeurs voisines, de l'ordre de 100 N/m2, et qui augmentent modérément avec la fréquence. A titre de comparaison, cet ordre de grandeur est très inférieur à celui que l'on donne pour des pâtes "classiques" normalement hydratées (20 à $30.10^4$ N/m2). Ainsi, NAVICKIS, ANDERSON, BAGLEY et JASBERG (J. Texture Studies, 1982, 13, 249-264) ont étudié des pâtes de farines de diverses classes de blé et de teneur en eau variant de 35 à 47 % ; ils obtiennent, pour une pâte d'hydratation normale (39 % de teneur en eau) G′ et G″ voisins de $2\text{-}3.10^4$ N/m2 dans cette gamme de fréquences ; et l'ordre de grandeur tombe à $10^3$ N/m2 pour les pâtes à 47 % de teneur en eau.

## Revendications

1. Procédé de fabrication rapide d'un pain naturel surhydraté, obtenu à partir d'une pâte surhydratée, caractérisé en ce qu'il comprend les opérations successives suivantes:
a) introduction, dans la cuve d'un batteur de:
100 parties en poids de farine sans levain,
80 parties en poids d'eau de coulage
2 parties en poids de levure préalablement diluée dans l'eau de coulage;
b) frasage, consistant à mélanger les ingrédients introduits dans la cuve du batteur, jusqu'à obtention d'un mélange homogène;
c) confection de la pâte par battage jusqu'à ce que les films protéiques du gluten soient formés;
d) pointage de la pâte pendant 1 heure dans un bac fariné ou éventuellement la cuve du batteur;
e) détaillage sur une planche farinée de la pâte en pâtons du poids désiré;
f) façonnage rapide des pâtons immédiatement après leur détaillage;
g) apprêt des pâtons en bannetons pendand une durée de 40 minutes, et
h) cuisson des pâtons dans un four à une température de 240 à 320°C.
2. Procédé selon la revendication 1, caractérisé en ce que l'on introduit en outre au cours de l'opération c) jusqu'à 2 parties en poids de sel fin.
3. Procédé selon la revendication 1 ou 2, caractérisé en ce que la cuve du batteur est équipée d'un outil mobile, en ce que l'opération b) est menée à faible vitesse de rotation dudit outil, pendant une courte période, jusqu'à l'homogénéité du mélange, et en ce que l'opération c) est menée à une vitesse de rotation dudit outil plus élevée, jusqu'à ce que la pâte reste retenue sur l'outil mobile du batteur.
4. Procédé selon l'une des revendications 1 à 3, caractérisé en ce que l'opération c) est menée jusqu'à ce que la pâte prenne une consistance viscoélastique définie par une composante élastique et une composante visqueuse de module respectivement conservatif (G′) et dissipatif (G″), d'une valeur minimum de 100N/m2.
5. Procédé selon l'une des revendications 1 à 4, caractérisé en ce qu'à la fin de l'opération de confection de la pâte par battage, la pâte a une température de 30°C.
6. Procédé selon l'une des revendications 1 à 5, caractérisé en ce que l'on utilise une farine dont la courbe d'alvéographe Chopin présente les caractéristiques suivantes:

force minimale (W$_{mini}$): 190, de préférence 200 erg
P/L minimum: 0,60
avec: P = ténacité de la pâte;
L = longueur de l'alvéogramme
gonflement minimum: 22 cm³.

## Claims

1. Process for the rapid preparation of a natural superhydrated bread obtained from a super-hydrated dough, characterized in that it comprises the following successive operations:
a) introducing into the bowl of a beater:
100 parts by weight of flour without yeast,
80 parts by weight of pouring water,
2 parts by weight of yeast, previously diluted in the pouring water;
b) kneading, consisting in mixing the ingredients introduced into the bowl of the beater until a homogeneous mixture is obtained;
c) preparing the dough by beating until the protein films of gluten are formed;
d) proving the dough for 1 hour in a floured tray or where appropriate in the bowl of the beater;
e) separating, on a floured board, the dough into lumps of the desired weight;
f) rapidly shaping the lumps immediately after they have been separated;
g) preparing the lumps in baskets for a period of 40 minutes, and
h) baking the lumps in an oven at a temperature from 240 to 320°C.
2. Process according to Claim 1, characterized in that, during the operation c), up to 2 parts by weight of fine salt are furthermore introduced.
3. Process according to Claim 1 or 2, characterized in that the bowl of the beater is equipped with a movable tool, in that the operation b) is carried out at a low rotary speed of the said tool for a short period until the mixture is homogeneous, and in that the operation c) is carried out at a higher rotary speed of the said tool until the dough remains clinging to the movable tool of the beater.
4. Process according to one of Claims 1 to 3, characterized in that the operation c) is carried out until the dough takes on a viscoelastic consistency defined by an elastic component and a viscous component having respectively a conserving modulus (G′) and a dissipating modulus (G″) of a minimum value of 100 N/m².
5. Process according to one of Claims 1 to 4, characterized in that at the end of the operation of shaping the dough by beating, the dough has a temperature of 30°C.
6. Process according to one of Claims 1 to 5, characterized in that a flour is used whereof the Chopin alveograph curve has the following characteristics:
minimum force (W$_{mini}$): 190, preferably 200 erg
P/L minimum: 0.60 where p = tenacity of the dough;
L = length of the alveogram
minimum expansion : 22 cm³.

## Patentansprüche

1. Verfahren zur schnellen Herstellung von natürlichem überhydratisiertem Brot, erhalten aus einem überhydratisierten Teig, dadurch gekennzeichnet, daß es die nachstehenden aufeinanderfolgenden Stufen umfaßt:
a) Einführen in den Trog eines Mischers von:
100 Gewichtsteilen Mehl ohne Sauerteig,
80 Gewichtsteilen Fließwasser
2 Gewichtsteilen vorher im Fließwasser verdünnter Hefe;
b) Kneten, bestehend im Vermischen der in den Trog des Mischers eingebrachten Bestandteile bis zur Erzielung eines homogenen Gemischs;
c) Herstellung des Teiges durch Schlagen, bis die Proteinfilme des Glutens gebildet sind;
d) Treibenlassen des Teiges während 1 Stunde in einem mit Mehl bestäubten Trog oder gegebenenfalls in dem Trog des Mischers;
e) Zerteilen des Teiges auf einem mit Mehl bestäubten Brett zu Teigwürsten mit gewünschtem Gewicht;
f) schnelle Formung der Teigwürste unmittelbar nach deren Zerteilung;
g) Zurichtung der Teigwürste in Backschüsseln während einer Dauer von 40 Minuten, und
h) Backen der Teigwürste in einem Ofen bei einer Temperatur von 240 bis 320°C.
2. Verfahren nach Anspruch 1, dadurch gekennzeichnet, daß man außerdem im Verlauf der Stufe c) bis zu 2 Gewichtsteile Feinsalz einführt.
3. Verfahren nach Anspruch 1 oder 2, dadurch gekennzeichnet, daß der Trog des Mischers mit einem beweglichen Gerät ausgerüstet ist, daß die Stufe b) mit geringer Rotationsgeschwindigkeit dieses Geräts während eines kurzen Zeitraums bis zur Homogenität des Gemischs durchgeführt wird, und daß die Stufe c) mit einer größeren Rotationsgeschwindigkeit des Geräts durchgeführt wird, bis der Teig an dem beweglichen Gerät des Mischers festgehalten wird.

4. Verfahren nach einem der Ansprüche 1 bis 3, dadurch gekennzeichnet, daß die Stufe c) durchgeführt wird, bis der Teig eine viskoelastische Konsistenz, definiert durch eine Elastizitätskomponente und eine Viskositätskomponente des Moduls, konservativ (G') bzw. dissipativ (G''), mit einem minimalen Wert von 100 N/m², annimmt.

5. Verfahren nach einem der Ansprüche 1 bis 4, dadurch gekennzeichnet, daß am Ende der Herstellungsstufe des Teiges durch Schlagen, der Teig eine Temperatur von 30°C hat.

6. Verfahren nach einem der Ansprüche 1 bis 5, dadurch gekennzeichnet, daß man ein Mehl verwendet, dessen alveographische Chopin-Kurve folgende Eigenschaften zeigt:

Minimale Kraft ($W_{mini}$): 190, bevorzugt 200 erg

P/L Minimum : 0,60

wobei: P = Zähigkeit des Teiges;

L = Länge des Alveogramms

Minimale Blähung : 22 cm³.

FIG. 1

FIG. 2